(19) 

Europäisches
Patentamt
European
Patent Office
Office européen
des brevets

(11)  **EP 1 963 422 B1**

(12)  **EUROPEAN PATENT SPECIFICATION**

(45) Date of publication and mention
of the grant of the patent:
**20.10.2010  Bulletin 2010/42**

(51) Int Cl.:
***C08L 23/10*** *(2006.01)*

(21) Application number: **06818686.5**

(86) International application number:
**PCT/EP2006/011121**

(22) Date of filing: **20.11.2006**

(87) International publication number:
**WO 2007/057224 (24.05.2007 Gazette 2007/21)**

(54) **MULTIMODAL POLYPROPYLENE POLYMER COMPOSITION**

MULTIMODALE POLYPROPYLENPOLYMERZUSAMMENSETZUNG

COMPOSITION DE POLYMERE POLYPROPYLENE MULTIMODAL

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **21.11.2005 EP 05257141**

(43) Date of publication of application:
**03.09.2008  Bulletin 2008/36**

(73) Proprietor: **Borealis Technology Oy
06101 Porvoo (FI)**

(72) Inventors:
• **OMMUNDSEN, Espen
N-3960 Stathelle (NO)**
• **JAASKELAINEN, Pirjo
FIN-06150 Porvoo (FI)**
• **WACHOLDER, Max
A-4021 Linz (AT)**

• **GAHLEITNER, Markus
A-4501 Neuhofen/Krems (AT)**
• **OYSAED, Harry
N-3960 Stathelle (NO)**
• **JOHANSEN, Geir, Morten
N-3960 Stathelle (NO)**

(74) Representative: **Campbell, Neil Boyd
Dehns
St Bride's House
10 Salisbury Square
London
EC4Y 8JD (GB)**

(56) References cited:
**EP-A- 0 339 804       EP-A- 1 170 305
EP-A- 1 724 303       WO-A-98/10016
WO-A-02/070572     US-A1- 2003 162 907**

EP 1 963 422 B1

**Description**

This invention relates to a polypropylene based copolymer composition that is suitable for making biaxially oriented films or articles, particularly biaxially-oriented containers, using injection stretch blow moulding (ISBM) processes. In particular, the invention concerns a polymer blend comprising a random copolymer of propylene and ethylene and a second polymer comprising either a second random copolymer of propylene and ethylene or a propylene homopolymer.

The ISBM process involves producing a preform by injection moulding followed by stretching and blowing the preform in order to induce biaxial orientation in the solid phase. ISBM processes are used to make containers such as bottles and jars having very good optical properties. Poly(ethylene terephthalate) (PET) is the most commonly used polymer for ISBM applications because PET has good processing behaviour and produces high quality bottles having good optical and barrier properties.

PET is however a relatively expensive polymer and cannot function at higher temperatures due to poor heat resistance. The skilled man is thus looking for alternatives to PET for ISBM applications.

Polypropylene is cheaper than PET and demonstrates better heat resistance than PET. In some applications, particularly when high temperature resistance is required, it would therefore be advantageous to use polypropylene instead of PET in ISBM processes. However, polypropylene has a narrow processing window when used in ISBM processes, i.e. polypropylene can be stretched or blown only over a narrow temperature range. Thus, polypropylene typically possess a 4°C processing window, sometimes even narrower, whereas PET can be processed over 15°C. This narrow range is not favourable industrially since temperature control becomes a large issue and higher scrap rates result.

The present inventors have therefore been addressing the problem of broadening the processing window of polypropylene whilst trying to maintain satisfactory optical and mechanical properties required of ISBM containers. In this regard, whilst polypropylene homopolymers may improve stiffness, they are translucent leading to poor optical properties. On the other hand random copolymers of propylene and ethylene have good optical properties but are not as stiff as polypropylene homopolymers. There is therefore a need for a polymer composition that has the heat resistance properties of polypropylene combined with the good optical and barrier properties of PET, which can be processed over a wide temperature range in ISBM processes.

It is known to blend polypropylene homopolymer with a random copolymer of propylene and ethylene in order to provide a polymer having good mechanical and optical properties. EP-A-0339804 discloses blends of a propylene/ olefin random copolymer and substantially isotactic homopolypropylene. The polymers are biaxially stretched in order to produce a bi-oriented film. The olefin is preferably ethylene and is present in the final polymer in an amount of up to about 5 mol %. The polymer blends of EP-A-0339804 have a melt flow rate (MFR) of around 2.1 to 3.2 g/10 min.

The present inventors have surprisingly found that a blend of polypropylene polymers having an overall MFR of 11 to 30 g/10min (measured according to ISO 1133 at 230°C and a load of 2.16 kg) possess not only excellent mechanical properties and optical properties but also a broadened processing window. The blend comprises a random copolymer of propylene and ethylene/other comonomer and a second polymer selected from polypropylene homopolymer or a second (different) random copolymer of propylene and ethylene/comonomer. This blend has been found to possess very low haze and a processing window of similar breadth to that of PET and offers therefore an ideal replacement for PET in ISBM applications.

Moreover, the high MFR value allows higher throughputs on film lines or in moulding processes and, in particular, in injection moulding applications, reduces the power needed to effect the stretching in the ISBM process.

Thus, viewed from one aspect, the invention provides a multimodal polymer composition prepared using Ziegler-Natta catalysis comprising:

(A) a polypropylene homopolymer or a propylene random copolymer comprising propylene and up to 5 weight % of comonomer ethylene; and
(B) a random copolymer of propylene and comonomer ethylene different from polymer (A);

wherein the total comonomer content of the polymer composition is 3.0 to 5.0 wt% and the melt flow rate (MFR) of the polymer composition is at least 6 g/10 min when measured according to ISO 1133 at 230°C and a load of 2.16 kg.

Viewed from another aspect the invention provides a process for the preparation of an article, the process comprising injection moulding a polymer composition to prepare a preform and subsequently biaxially stretching and blowing the preform at a temperature below the melting point of the polymer; wherein said polymer composition is a multimodal polymer composition comprising:

(A) a polypropylene homopolymer or a propylene random copolymer comprising propylene and up to 5 weight % of comonomer ethylene; and
(B) a random copolymer of propylene and comonomer ethylene different from polymer (A);

wherein the total comonomer content of the polymer composition is 3.0 to 5.0 wt% and the melt flow rate (MFR) of the polymer composition is at least 6 g/10 min when measured according to ISO 1133 at 230°C and a load of 2.16 kg.

Viewed from another aspect the invention provides the use of a polymer composition as hereinbefore described for the manufacture of a film or article by ISBM.

Viewed from another aspect the invention provides film or article having biaxial molecular orientation comprising a polymer composition as hereinbefore described.

The polymer composition of the present invention preferably comprises 10 to 90 wt % of polymer A, preferably 30 to 70 wt %, more preferably 40 to 60 wt % and most preferably 45 to 55 wt %. Conversely therefore, the composition preferably comprises 10 to 90 wt % of polymer B, preferably 30 to 70 wt %, more preferably 40 to 60 wt % and most preferably 45 to 55 wt %.

Polymer A preferably comprises up to 2.5 wt % comonomer, more preferably up to 2 wt % comonomer, e.g. 1.6 to 2.5 wt%.. Where polymer A is copolymeric, the comonomer is preferably ethylene. Most preferably however, polymer A is a polypropylene homopolymer.

The $MFR_2$ of polymer A may be in the range 0.1 to 100 g/10 min, preferably 1 to 60 g/10 min, more preferably 2 to 50 g/10 min, e.g. 5 to 30 g/10 min. It is may be higher than 6 g/10min, especially higher than 8 g/10min.

The MFR of polymer A may vary depending on whether it is a homopolymer or a copolymer. Homopolymers may have an MFR in the range 2 to 20 g/10 min, e.g. 5 to 15 g/10 min. Copolymers may have lower MFR's in general with values ranging from 0.1 to 100 g/10 min, e.g. 0.5 to 10 g/10 min or 1 to 5 g/10 min.

The density of this component may be around 890 to 920 $kg/m^3$, e.g. 900 to 910 $kg/m^3$.

The isotacticity of component (A) when it is a homopolymer may be as high as 98% although will preferably be at least 85 %, e.g. in the range 90 to 95 %.

Polymer B must be different from polymer A. Thus, where both components A and B are random copolymers of propylene, these polymers must be distinguishable. Thus, they may have different MFR's, Mw's, comonomer content, different comonomers, and so on. Generally, polymer B has an MFR of similar value to that of polymer A, e.g. within 5 g/10 min thereof, preferably within 3 g/10 min thereof (either higher or lower). The comonomer content of polymer B may be in the range 0.5 to 10 wt %, preferably 2.5 to 7 wt %, and most preferably 3.5 to 6 wt %. A preferred comonomer is ethylene. Where both components A and B are copolymeric, it is preferred if component B has a higher comonomer content. It will be appreciated that in certain circumstances it will be impossible to measure the properties of either polymer A or polymer B directly e.g. when a component is made second in a multistage process. The person skilled in the art will be able to work out the properties of each component from measurements taken on the first formed component and the overall properties of the polymer composition.

The total comonomer content of the polymer composition is preferably 1 to 5 wt %, more preferably at least 2.5 wt%, e.g. 2.5 to 4 wt %, and most preferably 3 to 4.0 wt %, e.g. 3 to 3.5 wt%.

The polymer composition of the present invention has a melt flow rate of 11 to 30 g/10min, such as 15 to 30 g/10min when measured according to ISO 1133 at 230 °C and a load of 2.16 kg..

The xylene soluble fraction of the polymer composition can range from 0.1 to 20 %, preferably 5 to 15 wt%. The melting point of the polymer composition may range from 140 to 180°C, preferably around 150 to 170°C. The polymer composition should also be partially crystalline, e.g. having a crystallinity of the order of 20 to 50 %, e.g. 25 to 40%.

The propylene composition of the invention may also have an average of at least 50, e.g. at least 60, preferably at least 70 chain disruptor units per 1000 propylene repeating units. The disruptor units are formed racemic propylene diads and by comonomer incorporated into the propylene chain. The remainder of the propylene will thus be formed by meso diads.

For the purposes of the present invention, the number of racemic disruptors per 1000 repeat units is defined by the number of racemic sequences disrupting the continuous meso sequences. Quantitatively, the total racemic diad [r] and the racemic tetrad [rrr] concentrations are required to determine the total number of times an isotactic chain is punctuated by either a pair of racemic diads or sequences involving racemic diads. The typical punctuating sequences in an isotactic homopolypropylene are:

-m m m m m m r r m m m m m m m m-

- m m m m m r $(r)_n$ r m m m m m -

- m m m m m r $(m)_n$ r m m m m m -

wherein "n" is a number which results in a sequence too short to crystallize. Upon considering the above three types of chain disruptions, the total chain disruptors involving "r" sequences per 1000 repeat units is given by:

$$\text{"r" Chain Disruptors/1000 repeat units} = 500([r] - [rrr])$$

If an olefinic chain disruptor ("O") is utilized as an additional chain punctuating unit, the contribution from these

is given by:

$$\text{"O" Chain Disruptors}/1000 \text{ repeat units} = 1000[O]$$

wherein [O] is the concentration of olefin. The two types of chain disruptors are added to give the total number of chain disruptors per 1000 repeat units.

The polymer of the invention is multimodal, preferably bimodal, i.e. its molecular weight profile does not comprise a single peak but instead comprises the combination of two or more peaks (which may or may not be distinguishable) centred about different average molecular weights as a result of the fact that the polymer comprises two or more separately produced components. It is believed that the multimodal nature of the claimed composition allows improvements in processing properties. It is preferred therefore if there is multimodality in the ethylene content of the components.

This can be achieved using a homopolymer and copolymer composition but where both components of the polymer are copolymeric, it is required that the polymers are different to ensure that the polymer composition is multimodal. Preferably therefore, where both components are copolymeric the nature of the comonomer used in each component will be different or the amount of comonomer used in each component will be different, e.g. at least differing by 1 wt%, e.g. at least 2 wt%, preferably at least 3 wt%.

Since the composition is multimodal, the molecular weight distribution of the composition is an important factor.

Such multimodal polymers may be prepared by simple blending, by two or more stage polymerisation or by the use of two or more different polymerisation catalysts in a one stage polymerisation. Preferably however they are produced in a two-stage polymerisation using the same catalyst, e.g. a metallocene catalyst or preferably a Ziegler-Natta catalyst, in particular a slurry polymerisation in a loop reactor followed by a gas phase polymerisation in a gas phase reactor. Conventional cocatalysts, supports/carriers, electron donors can be used.

A loop reactor - gas phase reactor system is marketed by Borealis A/S, Denmark as a BORSTAR reactor system. The polymer of the invention is thus preferably formed in a two stage process comprising a first slurry loop polymerisation followed by gas phase polymerisation in the presence of a Ziegler-Natta catalyst.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerisation may if desired be effected under supercritical conditions.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with the monomer (i.e. propylene and ethylene when required).

Preferably, component A of the polymer of the invention is produced in a continuously operating loop reactor where propylene (and comonomer when required) are polymerised in the presence of a polymerisation catalyst as stated above and a chain transfer agent such as hydrogen. The diluent is typically an inert aliphatic hydrocarbon, preferably isobutane or propane.

Component B can then be formed in a gas phase reactor using the same catalyst. Prepolymerisation can be employed as is well known in the art. Ziegler-Natta catalysts are preferred. The nature of the Ziegler-Natta catalyst is described in numerous prior publications, e.g. US 5234879. Such catalysts comprise a solid component comprising titanium, halogen and an electron donor supported on a magnesium halide as is well known.

Alternatively, the polymers of the invention can be made by blending two random copolymers of propylene or by blending one random copolymer with a polypropylene homopolymer in a conventional blending apparatus.

Random copolymers of propylene and propylene homopolymers of use in this invention are commercially available from various suppliers, e.g. Borealis A/S.

The polymer composition of the present invention has a higher MFR than those known in the art. In order to achieve sufficiently high MFR values it may be necessary to modify the propylene polymers and copolymers. Propylene polymers and copolymers can be modified by chemical cracking of the polymer chains often called visbreaking. Visbreaking is carried out in an extruder before moulding operations using organic peroxides with relatively high molar mass in a controlled manner. Statistically higher molar mass chains are cleaved more frequently than are lower molar mass molecules, resulting in an overall decrease in the average molar mass and an increase in MFR. The amount of peroxide fed into the extruder is controlled to reach the desired molar mass and MFR, and depends on the MFR of the reactor product. The formed polypropylene is often termed controlled rheology polypropylene and shows a number of advantages regarding processability, mechanics and optics.

Suitable amounts of peroxide are around 0.01 to 0.1 wt%.

The polymer composition of the invention can include minor amounts of standard polymer additives such as polymer processing agent, nucleating agents, antioxidants, UV stabilisers. It is also within the scope of the invention for the polymer composition claimed to be mixed with other alpha olefin polymers. It is preferred however if polymers A and B form the only polyolefin components in the composition.

In a further preferred embodiment however, the inventors have surprisingly found that the addition of a reheating agent to the polymer composition is particularly beneficial as it broadens still further the processing window of the polymer composition.

The addition of a reheating agent such as antimony, Ti, Cu, Mn, Fe, W, carbon black, graphite, infra-red absorbing dyes or other infra red absorbing materials is known in the art to allow more rapid heating of a polymer composition up to the temperature at which ISBM occurs. The present inventors have surprisingly found that the addition of reheating agent has a further benefit, namely it broadens the processing window at which the polymer composition can be stretched and blown.

In one embodiment, e.g. when the reheating agent is carbon black, it is preferred if the reheating agent is added to the propylene polymer in particulate form. In this regard, the reheating agent is incorporated into the polypropylene in the form of particles having particle sizes in the range of about 10 nanometers (nm) to about 100 micrometers, and more preferably in the range of 10 nm to 10 $\mu$m.

It is preferred however, if the reheating agent is generated within the polypropylene composition by in situ chemical reduction of a metal compound with a reducing agent. Thus, a reheating agent precursor may take the form of a metal compound containing one or more of antimony, titanium, copper, manganese, iron and tungsten, which can be present with a reducing agent such as an organic phosphorous acid or inorganic phosphorous acid, or tannic, gallic, and pyrogallic acid, or hydrazine, or sulphites, or tin II salts, nickel hydroxide or any organic or inorganic compound with an electrochemical potential sufficient to reduce the metal compounds to the metallic state. Preferably, the metal compound is antimony triglycolate or antimony (III) trioxide and the reducing agent is hypophosphorous acid.

Antimony as reheating agent can thus be formed by an in situ chemical reduction of an antimony compound with a reducing agent, such as hypophosphorous acid or other organic phosphorous acid or inorganic phosphorous acid. Preferred antimony compounds include antimony triglycolate (ATG), antimony triacetate (ATA) or antimony trioxide (ATO). The hypophosphorous acid reduces antimony compounds to antimony, which is dispersed in the polypropylene composition.

Preferably, the reheating agent is incorporated into the polypropylene polymer in an amount in the range of about 0,1 ppm to 1000 ppm, more preferably from 1 ppm to 350 ppm, most preferably from 2 ppm to 50 ppm, especially 5 to 20 ppm. In general, the higher the amount of reheating agent added, the more pronounced the broadening of the processing window will be. Low levels of reheating agent are preferred if transparency of the formed article is important.

As a further alternative, the reheating agents can be incorporated into a polypropylene composition in high concentration to form a masterbatch. The masterbatch may then be blended with polypropylene having a different (typically lower) concentration of reheating agent or preferably no reheating agent at all to form a polypropylene composition containing reheating agent in desired concentration.

In this embodiment, the reheating agent may be present in the masterbatch in an amount in the range of 50 ppm to 25,000 ppm, preferably less than 1250 ppm. The amount of masterbatch component to be mixed with the non masterbatch polymer composition will vary depending on the amount of reheating agent in the masterbatch but up to 5 wt%, e.g. up to 1 wt% may be appropriate.

In particular, the polymers of the invention are suitable for the production of articles having biaxial molecular orientation manufactured using ISBM processes.

Preferred articles are bottles, e.g. of 100 ml to 10 L in volume, e.g. 300 ml or 500 ml.

Biaxial orientation improves the physical and optical properties of the polymer, as well as improving the barrier properties. Biaxial molecular orientation is achieved by stretching the polymer at temperatures below the polymer melting point. In ISBM processes biaxial stretching is achieved in the stretch blow moulding step.

Two types of ISBM process are practised. In the single-stage process a preform is injection moulded and blown before it is allowed to cool. In the two-stage process the injection moulded preform is allowed to cool before it is reheated and blown into a container. These processes are well known and the person skilled in the art would be able to choose appropriate process conditions.

Ideally however, the stretching temperatures used are between 110°C and 160 °C, e.g. 130°C. Stretching speeds may range from 20 to 60 m/min in both TD and MD.

Control of the temperature of the polymer during the biaxial stretching step is critical. If the temperature is too high the stretched polymer will include areas of melted polymer, which reduces the molecular orientation, and will show variation in sample thickness. If the temperature is too low it will not be possible to biaxially stretch the polymer without the polymer failing. The processing window for any given polymer composition is the temperature range over which the polymer can in practice be biaxially stretched.

The invention covers compositions that when employed in an ISBM process will exhibit a broader processing window than a conventional unimodal polypropylene.

It is preferred if the compositions possess a processing window (in an ISBM simulation test) of at least 4°C, such as at least 7°C, e.g. at least 10°C, preferably at least 12°C, more preferably at least 15°C, especially at least 20°C.

In the ISBM simulation test, the processing window is that for biaxial stretching of injection moulded plaques and is defined as the difference between the Max. temp and Min. temp wherein:

Max. temp = the temperature at which a maximum stretching force of 10N is required to stretch the polymer (at maximum stretching force less than 10N, areas of melted polymer are visible on the sample)

Min. temp = the lowest temperature at which stretching of the polymer is possible without polymer failure

The test is described in Example 1 and is carried out as follows. Boxes of 35 cm x 15 cm x 10 cm, with a thickness of 2mm are injection moulded at Netstal 1570/300 MPS injection moulding machine at 230°C with an injection speed of 100 mm/s, a holding pressure to 315 grams product weight of box and a holding time of 12 s. Dosing at backpressure of 100 bar and 150 rpm. The mould temperature is 30°C on injection side and 15°C on clamping side. The cooling time is 15 s.

From the bottom of these boxes plaques of about 86mm x 86mm x 2mm are cut for biaxial drawing in a laboratory film stretcher KARO IV (Brückner Maschinenbau GmbH, Siegsdorf, Germany). The plaques are heated in a heating chamber by IR radiation, for 120s before drawing. The stretch speed is 35m/min. with a stretch ratio of 3.5 x 3.5 to achieve a thickness reduction from 2 mm to 0.2mm. During biaxial drawing the stretching force as a function of time is recorded.

For a plaque, the temperature range over which the sample can be stretched without producing visible failures is the processing window. Temperatures that are too low for stretching cause polymer failure. Temperatures that are too high for stretching cause the polymer to melt and/or lead to visible variations in the thickness of the blown articles.

It will be appreciated that as the polymer is stretched at a constant speed, the stretching force required to stretch the plaque will vary as different temperatures are used. Higher temperatures mean a more easily stretched polymer. However, if the force required to stretch the polymer drops below 10N, areas of melted polymer are visible on the sample. Thus, the higher end of the processing window in this test is defined as the temperature at which a force of 10N is required to stretch the polymer.

The ISBM simulation test described above tends to give processing windows slightly broader than are actually achieved in an real ISBM process. Thus, it is preferred if the compositions possess a processing window (in an ISBM process described below) of at least 4°C, e.g. at least 5°C, preferably at least 6°C, more preferably at least 7°C, especially at least 8°C.

This processing window is measured by stretch blow moulding of 300 ml polypropylene bottles on a one-cavity SIG Corpoplast LB01HR machine from 2.8 mm thick, 14g or 17 g pre-forms. This machine is equipped with two heater boxes, each having 5 IR lamps (L1-L5), but only one box was used in the determination of processing windows. L1 and L2 were 2500 watt lamps and L3, L4 and L5 were 2000 watt. The setting ratio of the lamps in the heater box was L1/L2/L3/L4/L5 46/57/85/85/54. Level 1 and 2 2500watt lamps has been used, in level 3,4 and 5 2000 watt lamps was used All preforms are heated for the same period of time. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling is provided to prevent surface melting. Cooling is carried out at 80% of the fan capacity. The preform is rotated on a mandrel throughout heating and conditioning at a speed of 100 rpm. After CT2, all bottles are blown under the same conditions. The preform is brought into the bottle mould and first stretched at a speed of 1000 mm/s. A pressure of 6 bar for 1.2 seconds was then used to blow up the bottle.

For each sample, the total heating energy is changed in steps and the resulting pre-form temperatures recorded to find the upper preform temperature and lower preform temperature at which bottles without visible failures can be blown. This range is defined as the processing window of biaxial stretching of bottles.

The polymer compositions of the invention exhibit excellent mechanical and optical properties. Haze values of less than 10%, preferably less than 8% are achievable (measured on 0.2 mm films). It is envisaged that the polymer composition of the invention, when biaxially stretched results in a surface of more perfect molecular orientation leading to improved clarity.

Haze measurements can also be taken on the injection stretch blow moulded articles as describde below. For an article having a wall thickness of 0.5 mm or less, e.g. 0.34 to 0.48 mm, haze values of less than 5%, especially less than 3% can be achieved.

Tensile modulus values of greater than 600, e.g. greater than 650 MPa, preferably greater than 700 MPa"preferably greater than 1000 MPa are also achievable with the polymer composition of the invention. In general, higher ethylene contents are associated with lower tensile modulus values.

Charpy (23°C), notched values are of the order of 4 to 10 kJ/m$^2$, e.g. 5 to 10 kJ/m$^2$. These parameters are preferably measured as described in the tests section below on injection moulded plaques.

The invention will now be described further with reference to the following non-limiting examples and Figures. Figure 1 is a plot of the drawing force in the transverse direction as a function of the drawing temperature for Example 1 and Comparative Example 1. Figure 2 show the processing window for each of Examples 1 to 6, and Comparative Examples 1 and 2. Figure 3 shows Haze as a function of drawing temperature for samples 2, 5 and 6 and comparative Example 1. Figure 4 shows the processing windows for plaques and bottles made in example 3. Figure 5 shows the area of haze measurement in example 3.

**Analytical Tests**

Values quoted in the description/examples are measured according to the following tests:

a) Xylene Solubles (XS):

For the determination of the xylene solubles fraction, 2.0 g of polymer is dissolved in 250 ml *p*-xylene at 135°C under agitation. After $30 \pm 2$ min the solution is allowed to cool for 15 min at ambient temperature and then allowed to settle for 30 min at $25 \pm 0.5$°C. The solution is filtered with filter paper into two 100 ml flasks.

The solution from the first 100 ml vessel is evaporated in nitrogen flow and the residue is dried under vacuum at 90°C until constant weight is reached. The xylene soluble fraction is calculated using the following equation:

$$XS\% = (100 \cdot m_1 \cdot v_0)/(m_0 \cdot v_1)$$

wherein

$m_0$ = initial polymer amount (g),
$m_1$ = weight of residue (g),
$v_0$ = initial volume (ml),
$v_1$ = volume of analysed sample (ml).
Isotacticity is measured using the XS value.

b) Melt flow rate (MFR), i.e. MFR$_2$, was measured according to ISO 1133 at 230°C and a load of 2.16 kg.

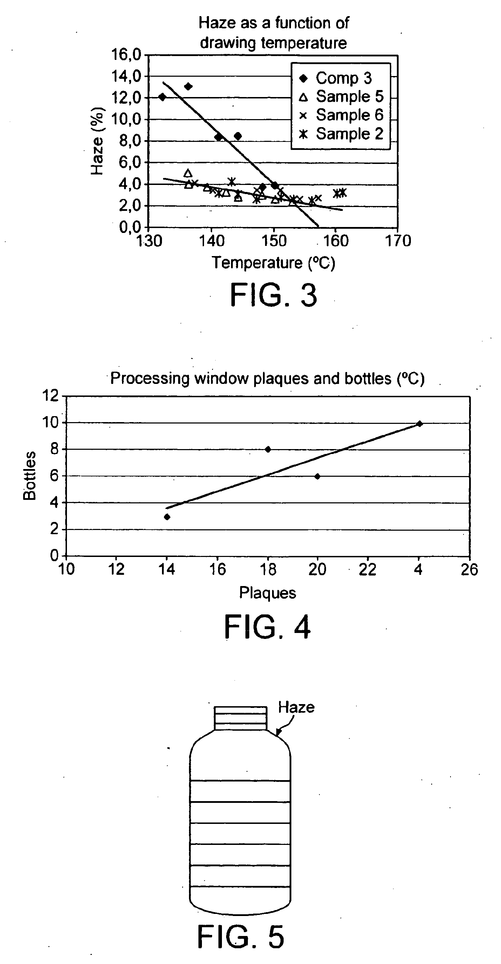

c) Haze was measured according to ASTM D1003 on drawn film of 0.2mm thickness and on ISBM bottles as shown in Figure 5, thickness as indicated in Table 6.

d) Thermal Properties

Melting temperature T$_m$ and the degree of crystallinity were measured with a Mettler TAB20 differential scanning calorimetry (DSC) on $3 \pm 0.5$ mg samples. Both crystallisation and melting curves were obtained during 10°C/min cooling and heating scans between 30° and 225°C. Melting and crystallisation temperatures were taken as the peaks of endotherms and exotherms. The degree of crystallinity was calculated by comparison with the heat of fusion of perfectly crystalline polypropylene i.e. 209 J/g.

e) Viscosity function and Shear Thinning (SHI)

Dynamic rheological measurements were carried out with Rheometrics RDA-II QC on compression molded samples under nitrogen atmosphere at 200°C using 25 mm diameter plate and plate geometry. The oscillatory shear experiments were done within the linear viscoelastic range of strain at frequencies from 0.01 to 500 rad/s. (ISO6721-1)

The values of storage modulus (G'), loss modulus (G"), complex modulus (G*) and complex viscosity (h*) were obtained as a function of frequency (w).

The Zero shear viscosity (h0) was calculated using complex fluidity defined as the reciprocal of complex viscosity. Its real and imaginary part are thus defined by

$$f'(w) = h'(w)/[h'(w)2 + h''(w)2]$$

and

$$f''(w) = h''(w)/[h'(w)2 + h''(w)2]$$

From the following equations

$$h' = G''/w \quad \text{and} \quad h'' = G'/w$$

$$f'(w) = G''(w) * w/[G'(w)2 + G''(w)2]$$

$$f''(w) = G'(w) * w/[G'(w)2 + G''(w)2]$$

The polydispercity index, PI, is calculated from cross-over point of G'(w) and G"(w).

There is a linear correlation between f' and f" with zero ordinate value of 1 /h0. (Heino et al.1)

For polypropylene this is valid at low frequencies and five first points (5 points/decade) are used in calculation of h0.

Elasticity indexes (G') and shear thinning indexes (SHI), which are correlating with MWD and are independent of MW, were calculated according to Heino 1, 2).

SHI is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362

2)The influence of molecular structure on some rheological properties of polyethylene. Heino, Eeva-Leena. Borealis Polymers Oy, Porvoo, Finland. Annual Transactions of the Nordic Rheology Society, 1995

f) Comonomer content was determined by C[13]NMR or in a known manner based on FTIR measurements calibrated with C[13]NMR.

The C13NMR spectra of polypropylenes were recorded on Bruker 400MHz spectrometer at 130°C from samples dissolved in 1,2,4-trichlorobenzene/benzene-d6 (90/10 w/w). For the pentad analysis the assignment is done according to the methods described in literature. (T. Hayashi, Y. Inoue, R. Chüjö, and T. Asakura, Polymer 29 138-43 (1988).and Chujo R, et al,Polymer 35 339 (1994).

Meso run length was determined from mmmm and mmmr pentads

$$MRL = 2 \times mmmm/mmmr.$$

g) Tensile modulus was measured on specimen according to ISO3167 (Multipurpose test specimen, type A (injected moulded)) according to ISO 527-2:1993.

h) Charpy, notched is measured according to ISO 179/1eA at 23°C using injection molded test specimen as described in EN ISO 1873-2 (80 x 10 x 4 mm)

i) Density is measured according to ISO 1183

k) SEC: The molecular weights and molecular weight distributions of polymers were determined with A Millipore Waters ALC/GPC operating at 135 °C and equipped with two mixed bed and one 107 Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes.

**Materials**

The following polymers were employed in the sample formulations:

(i) A random copolymer of propylene and ethylene having an ethylene content of 4.2 wt.% and an MFR is 1.5 g/10 min.

(ii) A polypropylene homopolymer having an MFR of 12.0 g/10 min, a density of 908 kg/m$^3$.

(iii) A random copolymer of propylene and ethylene having an ethylene content of 1 wt.% and an MFR is 1.5 g/10 min.

(iv) A random copolymer of propylene and ethylene having a ethylene content of 5.8 wt% and an MFR of 8 g/10min.

(v) A propylene homopolymer having an MFR of 10 g/10 min

(vi) A random copolymer of propylene and ethylene having a ethylene content of 3.2 wt% and an MFR of 13 g/10min

(vii) A random copolymer of propylene and ethylene having a ethylene content of 3.2 wt% and an MFR of 30 g/10min

(viii) A random copolymer of propylene and ethylene having a ethylene content of 3.3 wt% and an MFR of 20 g/10min.

**Production of Polymer Samples**

Samples 1 and 2 - Random copolymer/homopolymer blends

Sample 1 is a 60/40 wt.% blend of polymers (iv) and (v) respectively, prepared by physical mixing of polymers (iv) and (v) for 3 minutes, followed by compounding in a Prism 24mm double screw extruder at the conditions:

| | |
|---|---|
| Set temperature | 230°C (melt temperature 250°C) |
| N2 pressure: | 1.5 bars |
| Speed: | 300 rpm |
| Die Pressure: | 80 bars |

Sample 2 is a 65/35 wt.% blend of polymers (i) and (ii) respectively, prepared by physical mixing of polymers (i) and (ii) for 3 minutes, followed by compounding in a Prism 24mm double screw extruder at the conditions for sample 1.

In addition 0.05 wt.% of the peroxide Trigonox 101 was added to the blend before physical mixing.

Samples 3 to 6 - Random copolymer/random copolymer blends

Samples 3 to 5 are formed by blending polymer (i) and (iii) in a 60:40 weight ratio, prepared by physical mixing of polymers (i) and (iii) for 3 minutes, followed by compounding in a Prism 24mm double screw extruder at the conditions for sample 1.

In addition, 0.02 wt.%, 0.04 wt.% and 0.06 wt.% of the peroxide Trigonox 101 were added Sample 3, Sample 4 and Sample 5 respectively, before physical mixing of the blends.

Sample 6 is formed by blending polymer (i) and (iii) in a 50:50 weight ratio, prepared by physical mixing of polymers (i) and (iii) for 3 minutes, followed by compounding in a Prism 24mm double screw extruder at the conditions for sample 1.

In addition 0.06 wt.% of the peroxide Trigonox 101 was added before physical mixing of the blend.

Samples 7 to 10 - Production of a random copolymer/homopolymer blend or random copolymer/copolymer blend in a two-stage polymerisation

A continuous multistage process was used to produce a polymer blend. The process comprised a prepolymerisation step, a loop reactor polymerisation and a fluidized bed gas phase reactor polymerisation.

The catalyst used was highly active, stereospecific transesterified MgCl$_2$-supported Ziegler-Natta catalyst prepared according to US 5,234,879 at a titanization temperature of 135 °C. The catalyst was contacted with a cocatalyst (triethylaluminium, TEAL), and an external donor (donor D, dicyclopentyl dimethoxysilane) with the Al/Ti ratio of 200 and an Al/D ratio of 5, to yield the catalyst system.

The catalyst system and propylene were fed into the prepolymerisation reactor which was operated at 30°C. The prepolymerised catalyst was used in the subsequent polymerisation reactors.

Propylene, hydrogen, prepolymerised catalyst and optionally ethylene were fed into the loop reactor which was operated as a bulk reactor at the temperatures as indicated in Table 1 and a pressure of 55 bar.

Then, the polymer slurry stream was fed from the loop reactor into the gas phase reactor which was operated at the temperatures as indicated in Table 1 and a pressure of 20 bar. Propylene, ethylene and hydrogen were fed into the gas phase reactor to control the desired properties of the final polymer.

Table 1

|  | Sample 7 | Sample 8 | Sample 9 | Samples 10 |
|---|---|---|---|---|
| Al/D (mol/mol) | 5 | 5 | 5 | 5 |
| Al/Ti | 200 | 200 | 200 | 200 |
| Loop/GPR Split % | 42 / 58 | 44 / 56 | 40 / 60 | 66/34 |
| Loop |  |  |  |  |
| Temperature (°C) | 85 | 85 | 85 | 85 |
| MFR2 (g/10 min) | 21 | 20 | 20 | 10 |
| Ethylene content (wt-%) | 0,0 | 1,9 | 1,0 |  |
| GPR |  |  |  |  |
| Temperature (°C) | 85 | 85 | 85 | 85 |
| Final product |  |  |  |  |
| Ethylene content (wt-%) | 3,7 | 3,5 | 3,5 | 2,3 |
| MFR2 (g/10 min) | 19 | 21 | 21 | 18 |
| XS (%) | 10,3 | 5,9 |  | 4,7 |
| Tm (°C) | 165 | 149 | 154 | 164 |
| Tc (°C) | 115 | 120,3 | 124,4 | 129 |
| Crystallinity (%) |  | 35 |  |  |
| $SHI_{(0/50)}$ (Pa) |  | 5.8 |  |  |
| Charpy impact 23°C (kJ/m$^2$) | 7,2 | 6,6 | 6,5 | 6,2 |
| Tensile modulus (MPa) | 780 | 925 | 940 | 1280 |

Comparative Examples

Comparative Example 1 is formed from polymer (vi) only and comparative Example 2 formed from polymer (vii) only. Comparative Examples 3 is formed from polymer (viii) only.

Details of the polymers produced and the polymers used in Comparative Examples 1 and 2 are provided in Table 2.

Table 2

|  | MFR g/10min | Ethylene content / wt % | Composition |
|---|---|---|---|
| Sample 1 | 9 | 3.5 | 60/40 polymer (iv) and (v) |
| Sample 2# | 30* | 2.7 | 65:35 blend of polymer (i) and (ii) |
| Sample 3# | 10* | 3 | 60:40 blend of polymers (i) and (iii) |
| Sample 4 | 20* | 3 | 60:40 blend of polymers (i) and (iii) |
| Sample 5 | 30* | 3 | 60:40 blend of polymers (i) and (iii) |
| Sample 6# | 30* | 2.7 | 50:50 blend of polymers (i) and (iii) |
| Sample 7 | 19 | 3.7 | Reactor blend of homopolypropylene and propylene/ ethylene random copolymer |

(continued)

|  | MFR g/10min | Ethylene content / wt % | Composition |
|---|---|---|---|
| Sample 8 | 21 | 3.5 | Reactor blend of two propylene/ethylene random copolymer |
| Sample 9 | 21 | 3.5 | Reactor blend of two propylene/ethylene random copolymer |
| Sample 10# | 18 | 2,3 | Reactor blend of homopolypropylene and propylene/ethylene random copolymer |
| Comp Ex 1 | 12 | 3.2 | polymer (vi) |
| Comp Ex 2 | 30 | 3.2 | poylmer (vii) |
| Comp Ex 3 | 20 | 3.3 | Polymer (viii) |
| *visbroken<br># Now outside the scope of the claims | | | |

**Example 1 -Injection moulding and biaxial drawing (Simulation of ISBM)**

The Polymer compositions of samples 1 to 6 and Comparative Examples 1 and 2 were stretched in a laboratory stretching frame in order to simulate the stretching stage of an ISBM process.

Boxes of 35 cm x 15 cm x 10 cm, with a thickness of 2mm, were injection moulded at Netstal 1570/300 MPS injection moulding machine at 230°C with an injection speed of 100 mm/s, a holding pressure to 315 grams product weight of box and a holding time of 12 s. Dosing at backpressure of 100 bar and 150 rpm. The cooling time was 15 s. From the bottom of these boxes samples of about 86mm x 86mm x 2mm were cut for biaxial drawing in a laboratory film stretcher KARO IV (Brückner Maschinenbau GmbH, Siegsdorf, Germany) at VTT, Tampere, Finland. The plaques were heated in a heating chamber by IR radiation, for a defined period of time 120s before drawing. To simulate as much as possible the ISBM process, the maximum stretch speed of 35m/min was used. The stretch ratio of 3.5 x 3.5 was selected in order to achieve a thickness reduction from 2 mm to 0.2mm (same as in ISBM process). During the simultaneous drawing, force elongation curves were recorded in the machine direction and in the transverse direction.

For each sample the temperature range over which the sample could be stretched without producing visible failures was studied (the processing window).

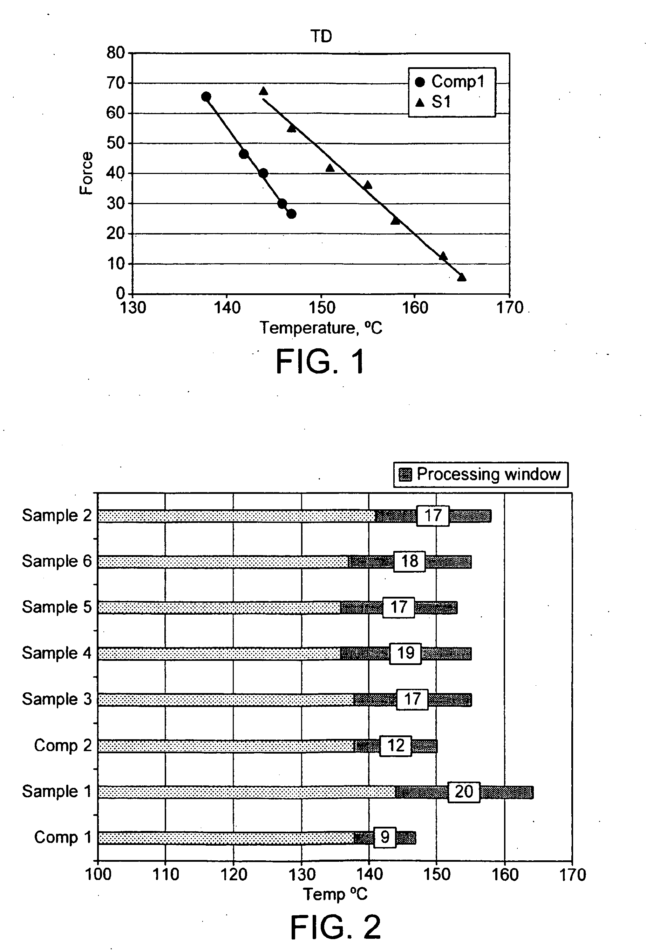

Plots of the drawing force in the transverse direction as a function of the drawing temperature for sample 1 and Comparative Example 1 are shown in Figure 1. It can be clearly seen that the polymer of the present invention has a broader process window for biaxial stretching than the random copolymer of the Comparative Example.

Figure 2 and Table 3 show the processing window for each of Examples 1 to 6, and Comparative Examples 1 and 2. The processing window is represented by the shaded area. The number shown for each Example is the processing window in °C.

Table 3

| Polymer | Processing window °C |
|---|---|
| Sample 1 | 20 |
| Sample 2# | 17 |
| Sample 3 | 17 |
| Sample 4 | 19 |
| Sample 5 | 17 |
| Sample 6# | 18 |
| Comp 1 | 9 |
| Comp 2 | 12 |
| # Not according to the invention | |

The polymers of the present invention provide a significantly broader processing window for ISBM processes than the polymers of the Comparative Examples.

## Example 2 - Optical Properties

Biaxial orientation of polypropylene improves the optical properties of the polymer. In this investigation 2 mm thick injection moulded plaques, are biaxially drawn with a draw ratio (3.5 x 3.5), resulting in 0.2 mm thick films (as described in Example 1). Haze values have been measured for the films drawn at different temperatures. The polymers of samples 2, 5 and 6 were compared with a sample of polymer (viii) (Comparative Example 3). The results are presented in Figure 3.

The results show that the clarity of the polymers improves with increasing stretching temperature. At stretching temperatures higher that 150 °C the analysed materials have comparable optical properties. At processing temperatures below 150°C, however, the optical properties of the polymers of the invention are much better than those of Comparative Example 3.

All the materials were clarified with the same concentration of 1,3:2,4-bis(3,4-dimethylbenzylidene sorbitol.

## Example 3

## Injection stretch blow moulding of bottles

PPreX® pre-forms with neck dimension 38/10 mm and weight 14g were injection moulded at standard conditions for polypropylene (MFR 20 g/10min).

Polypropylene bottles (300 ml) were stretch blow moulded on a one-cavity SIG Corpoplast LB01HR machine from 14 g pre-forms. This machine is equipped with two heater boxes, each having 5 IR lamps, but only one box was used in the determination of processing windows. The setting ratio of the lamps in the heater box was L1/L2/L3/L4/L5 46/57/85/85/54. All preforms were heated for the same period of time, only total heating was changed. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling was provided to prevent surface melting. Cooling was carried out at 80% of the fan capacity. Additionally the preform was rotated on a mandrel throughout heating and conditioning at a speed of 100 rpm. After CT2, all bottles were blown under the same conditions. The preform was brought into the bottle mould and first stretched at a speed of 1000 mm/s. A pressure of 6 bar for 1.2 seconds was then used to blow up the bottle.

For each sample, the total heating energy was changed in steps and the resulting pre-form temperatures recorded to find the upper preform temperature and lower preform temperature at which bottles without visible failures can be blown. This range is defined as the processing window of biaxial stretching of bottles..

Visible failures will be readily determined by those skilled in the art. For example, temperatures that are too low for stretching causes the stretch rod to puncture the preform. Temperatures that are too high for stretching cause the polymer to melt and leads to variations in the thickness of the blown articles.

The results are shown in the table 4 below:

Table 4

|  | Comp 3 | Sample 7 | Sample 8 | Sample 9 |
|---|---|---|---|---|
| upper Heating value (%) | 78 | 93 | 81 | 85 |
| upper preform temperature (°C) | 127 | 140 | 125 | 129 |
| lower Heating value (%) | 63 | 74 | 64 | 66 |
| lower prefrom temperature (°C) | 124 | 130 | 117 | 123 |
| Processing window (°C) | 3 | 10 | 8 | 6 |

For the same materials also the processing window for biaxial drawing of injection moulded plaques has been analysed. The plaques for biaxial drawing were prepared and tested as described in Example 1. The results are shown in Table 5:

Table 5

|  | Comp 3 | Sample 7 | Sample 8 | Sample 9 |
|---|---|---|---|---|
| Processing window (Plaques) (°C) | 14 | 24 | 18 | 20 |

The correlation between the processing windows of biaxial drawing of plaques and the injection stretch blow moulding of bottles is shown in figure 4

For all samples, haze was analysed at the top of each bottle, as shown in figure 5, according to method ASTM D2003, and also the thickness at the top section of the bottles were measured.

Table 6

|  | Comp 3 | Sample 7 | Sample 8 | Sample 9 |
|---|---|---|---|---|
| Haze value (%) | 1,3 | 2 | 0,9 | 1 |
| Thickness (mm) | 0,34 | 0,48 | 0,43 | 0,47 |

### Example 4

### Masterbatch

A polypropylene masterbatch was prepared by combining polymer sample viii with $Sb_2O_3$ and $H_2PO_3$ in a conventional extruder. After extrusion and in situ Sb reduction, a masterbatch containing 2000 ppm Sb was formed.

### Example 5

### Addition of reheat Additive

1 ppm Sb was added (as the masterbatch of Example 4, i.e. 0.05 wt% of the masterbatch) to Sample 10 a homo/random propylene/ethylene bimodal copoylmer.

Bottles were prepared using the procedure described in Example 3 (for sample 10 with and without Sb additive) except that the pre-form used weighed 17 g. The results are presented in table 7.

**Table 7**

| Material | Lower temp. | Upper temp. | Window |
|---|---|---|---|
| Sample 10 # | 151 | 156 | 5 |
| Sample 10 with reheating agent | 151 | 158 | 7 |
| # Not according to the invention | | | |

### Claims

1. An injection stretch blow moulded article comprising multimodal polymer composition prepared using Ziegler-Natta catalysis comprising:

   (A) a polypropylene homopolymer or a propylene random copolymer comprising propylene and up to 5 weight % of ethylene; and
   (B) a random copolymer of propylene and ethylene different from polymer (A);

   wherein the total comonomer content of the polymer composition is 3.0 to 5 wt% and the melt flow rate (MFR) of the polymer composition is at least 6 g/10 min when measured according to ISO 1133 at 230°C and a load of 2.16 kg.

2. An article as claimed in claim 1 wherein component (A) is a homopolymer.

3. An article as claimed in claim 1 or 2 wherein ethylene content of the composition is at least 3.0 to 3.5 wt%.

4. An article as claimed in any one of claims 1 to 3 wherein said composition has an MFR of 8 to 30 g/10min.

5. An article as claimed in any one of claims 1 to 4 wherein said composition has an MFR of 11 to 30 g/10min.

6. An article as claimed in any one of claims 1 to 5 wherein said composition has a xylene soluble fraction of 5 to 15 wt%.

7. An article as claimed in claim 1 in which polymer A is a random copolymer and the composition has an MFR of 11 to 30 g/10min.

8. An article as claimed in any one of claims 1 to 7 wherein polymer (A) forms 30 to 70 wt% of the composition and polymer (B) forms 30 to 70 wt% of the composition.

9. An article as claimed in any one of claims 1 to 8 wherein the composition is visbroken.

10. An article as claimed in any one of claims 1 to 9 additionally comprising a reheating additive.

11. An article as claimed in claim 10 wherein said additive is Sb.

12. An article as claimed in any one of claims 1 to 11 having biaxial molecular orientation.

13. A process for the preparation of an article, the process comprising injection moulding a polymer composition as defined in claim 1 to 11 to prepare a preform and subsequently biaxially stretching and blowing the preform at a temperature below the melting point of the polymer.

**Patentansprüche**

1. Durch Spritzgieß-Streckblasen hergestellter Gegenstand, umfassend eine multimodale Polymerzusammensetzung, die unter Anwendung der Ziegler-Natta-Katalyse hergestellt wurde, die folgendes aufweist:

   (A) ein Polypropylenhomopolymer oder ein statistisches Propylencopolymer, das Propylen und bis zu 5 Gew.-% Ethylen umfaßt; und
   (B) ein statistisches Copolymer von Propylen und Ethylen, das vom Polymer (A) verschieden ist;

   wobei der gesamte Comonomergehalt der Polymerzusammensetzung bei 3,0 bis 5 Gew.-% liegt und die Schmelzfließrate (MFR) der Polymerzusammensetzung mindestens 6 g/10 min beträgt, und zwar gemäß ISO 1133 bei 230°C und einer Last von 2,16 kg gemessen.

2. Gegenstand nach Anspruch 1, wobei die Komponente (A) ein Homopolymer ist.

3. Gegenstand nach Anspruch 1 oder 2, wobei der Ethylengehalt der Zusammensetzung mindestens 3,0 bis 3,5 Gew.-% beträgt.

4. Gegenstand nach einem der Ansprüche 1 bis 3, wobei die Zusammensetzung eine MFR von 8 bis 30 g/10 min aufweist.

5. Gegenstand nach einem der Ansprüche 1 bis 4, wobei die Zusammensetzung eine MFR von 11 bis 30 g/10 min aufweist.

6. Gegenstand nach einem der Ansprüche 1 bis 5, wobei die Zusammensetzung einen in Xylol löslichen Anteil von 5 bis 15 Gew.-% aufweist.

7. Gegenstand nach Anspruch 1, wobei das Polymer A ein statistisches Copolymer ist und die Zusammensetzung eine MFR von 11 bis 30 g/10 min aufweist.

8. Gegenstand nach einem der Ansprüche 1 bis 7, wobei das Polymer (A) 30 bis 70 Gew.-% der Zusammensetzung und das Polymer (B) 30 bis 70 Gew.-% der Zusammensetzung ausmachen.

9. Gegenstand nach einem der Ansprüche 1 bis 8, wobei die Zusammensetzung dem Visbreaking unterzogen worden ist.

10. Gegenstand nach einem der Ansprüche 1 bis 9, der außerdem einen Wiedererwärmungszusatz aufweist.

11. Gegenstand nach Anspruch 10, wobei der Zusatz Sb ist.

**12.** Gegenstand nach einem der Ansprüche 1 bis 11, der eine biaxiale Molekülorientierung aufweist.

**13.** Verfahren zum Herstellen eines Gegenstandes, wobei das Verfahren das Spritzgießen einer Polymerzusammensetzung nach Anspruch 1 bis 11, so daß ein Vorformling erzeugt wird, und das anschließende biaxiale Recken und Blasen des Vorformlings bei einer Temperatur unterhalb des Schmelzpunkts des Polymers umfaßt.

**Revendications**

**1.** Article moulé par injection-soufflage avec étirage comprenant une composition de polymère multimodal préparée en utilisant un catalyseur de Ziegler-Natta comprenant :

(A) un homopolymère de polypropylène ou un copolymère aléatoire de propylène comprenant du propylène et jusqu'à 5 % en poids d'éthylène ; et
(B) un copolymère aléatoire de propylène et d'éthylène différent du polymère (A) ;

dans lequel la teneur en comonomère totale de la composition de polymère est comprise dans la plage allant de 3,0 à 5 % en poids et l'indice de fluidité (MFR) de la composition de polymère est d'au moins 6 g/10 minutes lorsque mesuré selon la norme ISO 1133 à 230 °C et une charge de 2,16 kg.

**2.** Article selon la revendication 1, dans lequel le composant (A) est un homopolymère.

**3.** Article selon la revendication 1 ou 2, dans lequel la teneur en éthylène de la composition est comprise dans la plage allant d'au moins 3,0 à 3,5 % en poids.

**4.** Article selon l'une quelconque des revendications 1 à 3, dans lequel ladite composition possède un MFR compris dans la plage allant de 8 à 30 g/10 minutes.

**5.** Article selon l'une quelconque des revendications 1 à 4, dans lequel ladite composition possède un MFR compris dans la plage allant de 11 à 30 g/10 minutes.

**6.** Article selon l'une quelconque des revendications 1 à 5, dans lequel ladite composition possède une fraction soluble dans le xylène comprise dans la plage allant de 5 à 15 % en poids.

**7.** Article selon la revendication 1, dans lequel le polymère (A) est un copolymère aléatoire et la composition possède un MFR compris dans la plage allant de 11 à 30 g/10 minutes.

**8.** Article selon l'une quelconque des revendications 1 à 7, dans lequel le polymère (A) forme de 30 à 70 % en poids de la composition et le polymère (B) forme de 30 à 70 % en poids de la composition.

**9.** Article selon l'une quelconque des revendications 1 à 8, dans lequel la composition est viscoréduite.

**10.** Article selon l'une quelconque des revendications 1 à 9, comprenant en outre un additif de réchauffage.

**11.** Article selon la revendication 10, dans lequel ledit additif est le Sb.

**12.** Article selon l'une quelconque des revendications 1 à 11, possédant une orientation moléculaire biaxiale.

**13.** Procédé de préparation d'un article, le procédé comprenant le moulage par injection d'une composition de polymère selon l'une quelconque des revendications 1 à 11 pour préparer une préforme puis l'étirement biaxial et le soufflage de la préforme à une température inférieure au point de fusion du polymère.

FIG. 1

FIG. 2

Haze as a function of
drawing temperature

FIG. 3

Processing window plaques and bottles (°C)

FIG. 4

FIG. 5

**EP 1 963 422 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0339804 A

- US 5234879 A

**Non-patent literature cited in the description**

- **Heino, E.L. ; Lehtinen, A ; Tanner, J. ; Seppälä, J. ; Neste Oy.** Porvoo, Finland. *Theor. Appl. Rheol., Proc. Int. Congr. Rheol., 11th,* 1992, vol. 1, 360-362

- **Heino, Eeva-Leena.** Annual Transactions of the Nordic Rheology Society. *Borealis Polymers Oy, Porvoo, Finland,* 1995
- **T. Hayashi ; Y. Inoue ; R. Chüjö ; T. Asakura.** *Polymer,* 1988, vol. 29, 138-43
- **Chujo R et al.** *Polymer,* 1994, vol. 35, 339